(19) **Europäisches Patentamt**
**European Patent Office**
**Office européen des brevets**

(11) **EP 4 755 959 A1**

(12) **EUROPEAN PATENT APPLICATION**
published in accordance with Art. 153(4) EPC

(43) Date of publication:
**10.06.2026 Bulletin 2026/24**

(51) International Patent Classification (IPC):
*C08J 9/18* (2006.01)

(21) Application number: **24848978.3**

(52) Cooperative Patent Classification (CPC):
**C08J 9/18**

(22) Date of filing: **22.07.2024**

(86) International application number:
**PCT/JP2024/026133**

(87) International publication number:
**WO 2025/028323 (06.02.2025 Gazette 2025/06)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **03.08.2023 JP 2023127165**

(71) Applicant: **JSP Corporation
Tokyo 100-0005 (JP)**

(72) Inventor: **KOSHITA, Nobumasa
Yokkaichi-shi, Mie 510-0881 (JP)**

(74) Representative: **Gille Hrabal
Partnerschaftsgesellschaft mbB
Patentanwälte
Brucknerstraße 20
40593 Düsseldorf (DE)**

(54) **POLYPROPYLENE RESIN FOAM PARTICLES**

(57) A polypropylene-based resin expanded bead has a foamed core layer made of a polypropylene-based resin and a covering layer covering the foamed core layer. The covering layer is made of a linear low density polyethylene, a mass ratio of the covering layer to the foamed core layer is 0.005 or more and 0.05 or less, and the polypropylene-based resin making up the foamed core layer satisfies a predetermined condition (i) or (ii). The expanded bead can significantly reduce steam pressure during in-mold molding, shorten curing time to obtain an expanded beads molded article having a desired shape and excellent appearance even if the curing time is shortened.

**Description**

TECHNICAL FIELD

The present invention relates to a polypropylene-based resin expanded bead.

BACKGROUND ART

Polypropylene-based resin expanded beads molded articles are used in a variety of applications due to their lightweight nature and excellent shock absorption and rigidity. One method for manufacturing polypropylene-based resin expanded beads molded articles is, for example, an in-mold molding method, in which polypropylene-based resin expanded beads are filled into a mold and heated with steam, which causes the expanded beads to undergo secondary expansion and the surface of the beads to melt, fusing the beads together to form a desired shape. The article is cooled in the mold with water, air, or the like, and then released from the mold.

If the expanded beads molded article after the in-mold molding is stored at room temperature, residual steam that flowed into the cells of the expanded beads molded article during the in-mold molding condenses in the cells, creating a negative pressure within the cells, and causing the volume of the expanded beads molded article to shrink, which can result in significant deformation of the molded article. Therefore, after releasing the expanded beads molded article from the mold, a curing step is required in which the expanded beads molded article is left to stand for a predetermined period of time in a high-temperature atmosphere adjusted to, for example, a temperature of about 60°C to 80°C to restore the shape of the expanded beads molded article. This curing step is a process that takes a long time, for example, about 12 hours.

Therefore, methods for shortening curing time are being investigated to improve productivity. For example, PTL1 discloses an expanded beads molded article that does not require any special equipment or processing steps, is easy to dry, has minimal dimensional shrinkage, and does not require a high-temperature curing step. The expanded beads molded article disclosed in PTL1 is obtained by filling a mold with expanded beads composed of a foamed core layer composed of a crystalline thermoplastic resin and a non-foamed covering layer, introducing steam or hot air into the mold to heat and cause the expanded beads to fuse together, so that fused portions are formed where the covering layers come into contact with each other, and voids are formed between the expanded beads.

Further, PTL2 discloses a polypropylene-based resin expanded bead that can shorten the curing time and can improve secondary expansion properties, fusion-bonding properties, and crack resistance. The polypropylene-based resin expanded bead disclosed in PTL2 uses a propylene-based random copolymer or random block copolymer as a base resin that has a melt flow index, Z-average molecular weight, melting point, and endothermic energy of an endothermic peak appearing on the high-temperature side of a DSC curve within specific ranges.

CITATION LIST

PATENT LITERATURE

PTL1: JP 2003-039565 A
PTL2: JP 2000-129028 A

SUMMARY OF INVENTION

TECHNICAL PROBLEM

Although the technology described in PTL1 enables the curing step to be omitted, numerous voids are formed between the expanded beads of the molded article, resulting in a significantly poor appearance of the obtained expanded beads molded article, which makes the article unusable for some applications. While the technology described in PTL2 can shorten the curing step, there is room for improvement in its effectiveness. In addition, the technology described in PTL2 requires high steam pressure for molding, placing a heavy burden on the equipment. Therefore, there is a need for a method to solve the above problems, in particular a method that reduces steam pressure and shortens the curing step thereof.

Therefore, an object of the present invention is to provide an expanded bead that can significantly reduce steam pressure during in-mold molding, shorten curing time and, furthermore, to obtain an expanded beads molded article having a desired shape and excellent appearance even if the curing time is shortened.

SOLUTION TO PROBLEM

The present inventors have found that the object can be attained by adopting a configuration given below, reaching the completion of the present invention.

Specifically, the present invention is as follows.

<1> A polypropylene-based resin expanded bead comprising: a foamed core layer constituted of a polypropylene-based resin; and a covering layer covering the foamed core layer, wherein the covering layer is constituted of a linear low density polyethylene, a mass ratio of the covering layer to the foamed core layer is 0.005 or more and 0.05 or less, and the polypropylene-based resin constituting the foamed core layer satisfies the following (i) or (ii):

(i) the polypropylene-based resin constituting the foamed core layer is an ethylene-butene-propylene copolymer i, and a total amount $Ccmt_{(i)}$ of an ethylene component and a butene component in the copolymer i is 3.5% by mass or more;

(ii) the polypropylene-based resin constituting the foamed core layer is one or more types of a copolymer ii selected from the group consisting of an ethylene-propylene copolymer and a butene-propylene copolymer, and a total amount $Ccmt_{(ii)}$ of an ethylene component and a butene component in the copolymer ii is 4.0% by mass or more.

<2> The polypropylene-based resin expanded bead according to <1>, wherein the linear low density polyethylene constituting the covering layer is a resin polymerized using a Ziegler-Natta polymerization catalyst.

<3> The polypropylene-based resin expanded bead according to <1> or <2>, wherein the polypropylene-based resin constituting the foamed core layer has a flexural modulus of 400 MPa or more and less than 800 MPa.

<4> The polypropylene-based resin expanded bead according to any one of <1> to <3>, wherein the covering layer has an average thickness (Tt) of 0.1 $\mu$m or more and 5 $\mu$m or less.

<5> The polypropylene-based resin expanded bead according to any one of <1> to <4>, wherein the polypropylene-based resin constituting the foamed core layer is the ethylene-butene-propylene copolymer i.

<6> The polypropylene-based resin expanded bead according to any one of <1> to <5>, wherein the polypropylene-based resin constituting the foamed core layer is a resin polymerized using a Ziegler-Natta polymerization catalyst.

<7> The polypropylene-based resin expanded bead according to any one of <1> to <6>, wherein the linear low density polyethylene constituting the covering layer has a flexural modulus of 120 MPa or more and 600 MPa or less.

<8> The polypropylene-based resin expanded bead according to any one of <1> to <7>, wherein the expanded bead has a bulk expansion ratio of 5 times or more and 45 times or less.

ADVANTAGEOUS EFFECTS OF INVENTION

It is possible to provide an expanded bead that can significantly reduce steam pressure during in-mold molding, shorten curing time to obtain an expanded beads molded article having a desired shape and excellent appearance even if the curing time is shortened.

DESCRIPTION OF EMBODIMENTS

The polypropylene-based resin expanded bead of the present invention (hereinafter, also simply referred to as "polypropylene-based resin expanded bead" or "expanded bead") has a foamed core layer composed of a polypropylene-based resin, and a covering layer covering the foamed core layer, wherein the covering layer is composed of a linear low density polyethylene, a mass ratio of the covering layer to the foamed core layer is 0.005 or more and 0.05 or less, and the polypropylene-based resin making up the foamed core layer satisfies the following (i) or (ii).

(i) The polypropylene-based resin making up the foamed core layer is an ethylene-butene-propylene copolymer i, and a total amount $Ccmt_{(i)}$ of an ethylene component and a butene component in the copolymer i is 3.5% by mass or more.

(ii) The polypropylene-based resin making up the foamed core layer is one or more types of a copolymer ii selected from the group consisting of an ethylene-propylene copolymer and a butene-propylene copolymer, and a total amount $Ccmt_{(ii)}$ of an ethylene component and a butene component in the copolymer ii is 4.0% by mass or more.

By having the above configuration, the polypropylene-based resin expanded bead of the present invention can significantly reduce steam pressure during in-mold molding, shorten curing time and, furthermore, to obtain an expanded beads molded article having a desired shape and excellent appearance even if the curing time is shortened.

Herein, "shortening the time required for the curing step (curing time)" refers to, for example, shortening the leaving time in the curing step, which typically requires leaving the molded article after mold release in a high-temperature environment of about 60°C to 80°C for about 12 hours in order to stabilize the shape of the molded article. With the expanded bead of the present invention, the shape of the molded article can be stabilized by, for example, leaving the molded article after mold release in a high-temperature environment of about 60°C to 80°C for about two hours. Further, obtaining a molded article by shortening the curing time in in-mold molding of an expanded bead, as described above, is also referred to as short-cure molding.

In addition, as used herein, "A to B" representing a numerical range is synonymous with "A or more and B or less," and is used to encompass the values A and B that are the endpoints of the numerical range.

[Foamed core layer]

The polypropylene-based resin expanded bead of the present invention has a foamed core layer composed of a polypropylene-based resin.

The foamed core layer of the polypropylene-based resin expanded bead (hereinafter, also simply referred to as "foamed core layer") is composed of a polypropylene-based resin and is in an expanded state. "Polypropylene-based resin" refers to a homopolymer of a propylene monomer or a propylene copolymer containing 50% by mass or more of a structural unit derived from propylene.

<Polypropylene-based resin>

In the polypropylene-based resin expanded bead of the present invention, the polypropylene-based resin making up the foamed core layer satisfies the following (i) or (ii).

That is, the polypropylene-based resin making up the foamed core layer is either a polypropylene-based resin satisfying (i) below, a polypropylene-based resin satisfying (ii) below, or a mixed resin of a polypropylene-based resin satisfying (i) below and a polypropylene-based resin satisfying (ii) below.

(i) The polypropylene-based resin making up the foamed core layer is an ethylene-butene-propylene copolymer i, and a total amount $Ccmt_{(i)}$ of an ethylene component and a butene component in the copolymer i is 3.5% by mass or more.
(ii) The polypropylene-based resin making up the foamed core layer is one or more types of a copolymer ii selected from the group consisting of an ethylene-propylene copolymer and a butene-propylene copolymer, and a total amount $Ccmt_{(ii)}$ of an ethylene component and a butene component in the copolymer ii is 4.0% by mass or more.

The "total amount of an ethylene component and a butene component in the copolymer" means "the total (% by mass) of the amount (% by mass) of an ethylene-derived component and the amount (% by mass) of a butene-derived component relative to the total mass of the copolymer." However, when the copolymer contains only one of an ethylene-derived component or a butene-derived component, the total amount of the ethylene component and the butene component in the copolymer means the amount (% by mass) of the one component.

Thus, the foamed core layer is composed of a polypropylene-based resin that has a high ratio of monomers other than propylene, which increases the secondary expansion properties of the foamed core layer and provides excellent low-pressure moldability. Further, because the amount of steam required for in-mold molding is reduced, the resulting molded article tends to maintain dimensional stability even with a short curing time thereof.

The polypropylene-based resin making up the foamed core layer is preferably a resin polymerized using a Ziegler-Natta polymerization catalyst. When the polypropylene-based resin making up the foamed core layer is a resin polymerized using a Ziegler-Natta polymerization catalyst, in particular short-cure moldability tends to be exhibited more consistently. Compared to a case where the same resin is polymerized using, for example, a metallocene polymerization catalyst, the molecular weight distribution is likely to be broader and there is likely to be a relatively larger amount of low-molecular-weight components. Those low-molecular-weight components are likely to melt at an early stage of the in-mold molding, improving fusion-bonding properties and dimensional stability even with a short curing time thereof.

(Ethylene-butene-propylene copolymer i)

Of the above (i) and (ii), the polypropylene-based resin is preferably a polypropylene-based resin that satisfies (i). That is, the main component of the polypropylene-based resin is preferably an ethylene-butene-propylene copolymer i. Specifically, the mass proportion of the ethylene-butene-propylene copolymer i in the polypropylene-based resin making up the foamed core layer is preferably 60% by mass or more, and more preferably 80% by mass or more. When the polypropylene-based resin is the ethylene-butene-propylene copolymer i, adhesive properties to the linear low density polyethylene making up the covering layer are better, and the effect of the present invention can be more consistently achieved.

When the polypropylene-based resin making up the foamed core layer is the ethylene-butene-propylene copolymer i, the total amount $Ccmt_{(i)}$ of the ethylene component and the butene component in the copolymer i is 3.5% by mass or more.

The total amount $Ccmt_{(i)}$ of the ethylene component and the butene component in the copolymer i is 3.5% by mass or more, preferably 4.0% by mass or more, and more preferably 4.5% by mass or more. Further, the total amount $Ccmt_{(i)}$ is preferably 8.0% by mass or less, more preferably 7.0% by mass or less, and further preferably 6.0% by mass or less. The total amount $Ccmt_{(i)}$ is preferably from 3.5 to 8.0% by mass, more preferably from 4.0 to 8.0% by mass, further preferably from 4.0 to 7.0% by mass, and still further preferably from 4.5 to 6.0% by mass. When the total amount of the ethylene component and the butene component in the copolymer i is within the above range, the secondary expansion properties of the foamed core layer are increased, and low-pressure moldability is excellent. Furthermore, short-cure moldability is also good.

The mass ratio of the ethylene component to the butene component (ethylene/butene) in the copolymer i is preferably from 50/50 to 98/2, more preferably from 60/40 to 95/5, further preferably from 70/30 to 92/8, and still further preferably from 80/20 to 90/10. When the mass ratio of the ethylene component to the butene component is within the above range, the adhesive properties with the linear low density polyethylene that constitutes the covering layer are better.

(One or more types of copolymer ii selected from the group consisting of an ethylene-propylene copolymer and a butene-propylene copolymer)

If the polypropylene-based resin making up the foamed core layer is one or more types of a copolymer ii selected from the group consisting of an ethylene-propylene copolymer and a butene-propylene copolymer, the total amount $Ccmt_{(ii)}$ of the ethylene component and the butene component in the copolymer ii is 4.0% by mass or more.

Of the copolymers ii, the polypropylene-based resin making up the foamed core layer is preferably an ethylene-propylene copolymer. Further, the copolymer ii may be a mixed resin of an ethylene-propylene copolymer and a butene-propylene copolymer.

The total amount $Ccmt_{(ii)}$ of the ethylene component and the butene component in the copolymer ii is 4.0% by mass or more, preferably 4.2% by mass or more, and more preferably 4.5% by mass or more. Further, the total amount $Ccmt_{(ii)}$ is preferably 8.0% by mass or less, more preferably 7.0% by mass or less, and further preferably 6.0% by mass or less. The total amount $Ccmt_{(ii)}$ is preferably from 4.0 to 8.0% by mass, more preferably from 4.0 to 7.0% by mass, further preferably from 4.2 to 6.0% by mass, and still further preferably from 4.5 to 6.0% by mass. When the total amount of the ethylene component and the butene component in the copolymer ii is within the above range, the secondary expansion properties of the foamed core layer are increased, and low-pressure moldability is excellent. Furthermore, short-cure moldability is also good.

The ethylene-butene-propylene copolymer i and one or more types of copolymer ii selected from the group consisting of the group consisting of an ethylene-propylene copolymer and a butene-propylene copolymer that constitute the foamed core layer may be random copolymers or block copolymers. From the viewpoint of more reliably increasing the moldability of the expanded bead, random copolymers are preferred.

The amount of each monomer component in a copolymer means the amount of the constituent unit derived from each monomer in the copolymer. The amount of these monomer components can be determined by a known method using IR spectroscopy.

(Flexural modulus Mc)

The flexural modulus Mc of the polypropylene-based resin making up the foamed core layer is, from the viewpoint of improving moldability at low pressure and shortening the curing time, preferably 400 MPa or more, more preferably 500 MPa or more, further preferably 550 MPa or more, and particularly preferably 600 MPa or more, and preferably less than 800 MPa, more preferably 750 MPa or less, further preferably 700 MPa or less, and particularly preferably 650 MPa or less. That is, the flexural modulus Mc of the polypropylene-based resin making up the foamed core layer is preferably 400 MPa or more and less than 800 MPa, more preferably 500 MPa or more and 750 MPa or less, further preferably 550 MPa or more and 700 MPa or less, and particularly preferably 600 MPa or more and 650 MPa or less. By keeping the flexural modulus Mc of the polypropylene-based resin that constitutes the foamed core layer within the above range, it is possible to achieve excellent low-pressure moldability and stabilize dimensions with a short curing step thereof.

The flexural modulus Mc of the polypropylene-based resin is determined based on JIS K 7171:2016.

Conventionally, when in-mold molding has been performed using expanded beads composed of a polypropylene-based resin having a flexural modulus of less than 800 MPa in particular, the resistance to shrinkage and deformation after mold release was extremely low, and therefore, if a short curing time was set, the molded article tended to significantly shrink or deform. On the other hand, with the above-mentioned expanded bead, the time required for the curing step can be shortened even when, for example, using expanded beads composed of a polypropylene-based resin having a flexural modulus of less than 800 MPa. This is because, as will be described later, the expanded bead has, in addition to having a foamed core layer composed of a polypropylene-based resin with a predetermined composition, a covering layer containing predetermined components and having a predetermined mass ratio relative to the foamed core layer.

(Melting point Tmc)

The melting point Tmc of the polypropylene-based resin making up the foamed core layer is, from the viewpoint of low-pressure moldability, short-cure moldability, and the mechanical properties of the molded article, preferably 125°C or higher, more preferably 128°C or higher, and further preferably 130°C or higher, and is preferably 160°C or lower, more preferably 150°C or lower, further preferably 145°C or lower, and still further preferably 140°C or lower. That is, the melting point (Tmc) of the polypropylene-based resin making up the foamed core layer is preferably from 125 to 160°C, more preferably from 128 to 150°C, further preferably from 130 to 145°C, and still further preferably 130 to 140°C.

The melting point of the polypropylene-based resin is determined by, based on JIS K 7121:1987, conditioning a test piece in accordance with "(2) Case of measuring melting temperature after carrying out a certain heat treatment", acquiring a DSC curve for the conditioned test piece by increasing its temperature from 30°C to 200°C at a heating rate of 10°C/min, and taking the apex temperature of the melting peak associated with the melting of the resin on the DSC curve as the melting point. Conditioning is performed at a heating rate and cooling rate of 10 °C/min. The flow rate of nitrogen gas in the measurement environment is 30 mL/min. When a plurality of melting peaks appear on the DSC curve, the apex temperature of the melting peak with the largest area is taken as the melting point.

(Melt flow rate (MFR))

The MFR of the polypropylene-based resin making up the foamed core layer is, from the viewpoint of improving expansion properties, low-pressure moldability, and short-cure moldability, preferably 2 g/10 min or more, more preferably 4 g/10 min or more, and further preferably 5 g/10 min or more, and preferably 15 g/10 min or less, more preferably 12 g/10 min or less, and further preferably 10 g/10 min or less. That is, the MFR of the polypropylene-based resin making up the foamed core layer is preferably from 2 to 15 g/10 min, more preferably from 4 to 12 g/10 min, and further preferably from 5 to 10 g/10 min.

The MFR of the polypropylene-based resin is measured at a temperature of 230°C and a load of 2.16 kg in accordance with JIS K 7210-1:2014.

The foamed core layer may contain other polymers as long as the object and advantageous effects of the present invention are not inhibited thereby. Examples of other polymers include polypropylene-based resins that do not satisfy either (i) or (ii) above, other types of thermoplastic resins other than polypropylene-based resins, thermoplastic elastomers, and the like. However, the amount of the other polymers in the foamed core layer is preferably 20% by mass or less, more preferably 10% by mass or less, further preferably 5% by mass or less, and still further preferably 1% by mass or less. It is preferable that the foamed core layer contains, as a polymer, 0% by mass of the other polymers, that is, only a polypropylene-based resin that satisfies the above (i) or (ii).

The foamed core layer may contain additives as appropriate, as long as the advantageous effects of the present invention are not inhibited thereby. Examples of additives added to the foamed core layer include a cell adjusting agent, a lubricant, a flame retardant, a flame retardant synergist, a colorant, a cell nucleating agent, a plasticizer, an antistatic agent, an antioxidant, a UV absorbing agent, a light stabilizer, a conductive filler, an antimicrobial agent, and the like.

[Covering layer]

The covering layer of the polypropylene-based resin expanded bead (hereinafter, also simply referred to as "covering layer") is composed of a linear low density polyethylene, and covers the foamed core layer composed of the polypropylene-based resin. If the expanded bead does not have this covering layer, or if the resin making up the covering layer is, for example, a polypropylene-based resin, the amount of steam required for heat fusion increases excessively, preventing low-pressure moldability and short-cure moldability, which are the advantageous effects of the present invention, from being fully achieved.

From the viewpoint of reliably achieving the object and advantageous effects of the present invention, the amount of the linear low density polyethylene in the covering layer is preferably 50% by mass or more, more preferably 60% by mass or more, further preferably 70% by mass or more, still further preferably 80% by mass or more, and even still further preferably 90% by mass or more.

The proportion of the covering layer relative to the total surface area of the expanded bead (coverage rate of the foamed core layer by the covering layer) is, from the viewpoint of obtaining a sufficient effect from the covering layer, preferably 50% or more, and more preferably 60% or more.

An example of an expanded bead having a covering layer is a multi-layered expanded bead having a foamed-state cylindrical foamed core layer and a covering layer that covers the lateral surface of the foamed core layer.

The covering layer is preferably in a non-foamed state from the viewpoint of improving low-pressure moldability and short-cure moldability. Here, "non-foamed state" includes not only a state where no cells are present in the covering layer, but also a substantially non-foamed state where only very small cells are present. Further, the state in which no cells are present in the covering layer also includes the state in which cells that had been formed have since ruptured and disappeared.

<Linear low density polyethylene (PE-LLD)>

The covering layer is composed of a linear low density polyethylene (PE-LLD). The linear low density polyethylene is a linear copolymer of ethylene and an α-olefin. The α-olefin making up the copolymer usually has from 4 to 10 carbon atoms. Since a covering layer is composed of a linear low density polyethylene, it is possible to improve low-pressure moldability in particular, and improve short-cure moldability. This is thought to be due to improvement in fusion-bonding properties between the expanded beads by the linear low density polyethylene. Another reason for this is thought to be that the melting point of the linear low density polyethylene is within a suitable range and that the linear low density polyethylene has adequate crystallinity. If the resin making up the covering layer is a polyethylene-based resin other than a linear low density polyethylene, such as a high-density polyethylene (PE-HD), low-pressure moldability may be impaired and dimensional change may not be suppressed if the curing time is short. Moreover, if the resin making up the covering layer is a low density polyethylene (PE-LD), dimensional change may not be suppressed if the curing time is short.

(Heat of fusion)

From the viewpoint of short-cure moldability, the heat of fusion of the PE-LLD making up the covering layer is preferably 95 J/g or more and 130 J/g or less, more preferably 98 J/g or more and 120 J/g or less, and further preferably 100 J/g or more and 110 J/g or less.

The heat of fusion of the PE-LLD is determined by, based on JIS K 7122:1987, conditioning each test piece in accordance with "(2) Case of measuring heat of fusion after carrying out a certain heat treatment", acquiring a DSC curve for the conditioned test piece by increasing its temperature from 30°C to 200°C at a heating rate of 10°C/min, and determining the heat of fusion from the area of the melting peak associated with the melting of the resin on the DSC curve. The conditioning is performed at a heating rate and a cooling rate of 10 °C/min. The flow rate of nitrogen gas in the measurement environment is 30 mL/min. When a plurality of melting peaks appear on the DSC curve, the heat of fusion determined from the melting peak with the largest area is taken as the heat of fusion of the PE-LLD.

(Crystallization temperature)

From the viewpoint of short-cure moldability, the crystallization temperature of the PE-LLD making up the covering layer is preferably 100°C or higher and 115°C or lower, more preferably 100°C or higher and 110°C or lower, and further preferably 102°C or higher and 108°C or lower.

The crystallization temperature of the PE-LLD can be determined based on JIS K 7121:1987. Specifically, the crystallization temperature is determined by acquiring a DSC curve by heating each test piece from 23°C to 200°C at a heating rate of 10°C/min, holding the test piece at 200°C for 10 minutes, and then cooling the test piece to 30°C at a cooling rate of 10 °C/min, and taking the apex temperature of the exothermic peak associated with the crystallization of the resin on the DSC curve as the crystallization temperature. The flow rate of nitrogen gas in the measurement environment is 30 mL/min. When a plurality of exothermic peaks appear on the DSC curve, the apex temperature of the exothermic peak with the largest area is taken as the crystallization temperature.

(Density)

From the viewpoint of low-pressure moldability and short-cure moldability, the linear low density polyethylene (PE-LLD) making up the covering layer has a density of preferably 0.900 g/cm$^3$ or more, more preferably 0.905 g/cm$^3$ or more, and further preferably 0.910 g/cm$^3$ or more, and preferably 0.940 g/cm$^3$ or less, more preferably 0.930 g/cm$^3$ or less, and further preferably 0.920 g/cm$^3$ or less. That is, the density of the linear low density polyethylene (PE-LLD) making up the covering layer is preferably 0.900 g/cm$^3$ or more and 0.940 g/cm$^3$ or less, more preferably 0.905 g/cm$^3$ or more and 0.930 g/cm$^3$ or less, and further preferably 0.910 g/cm$^3$ or more and 0.920 g/cm$^3$ or less.

The density of the PE-LLD is measured, for example, according to method B (pycnometer method) described in JIS K 7112:1999.

(Melting point Tms)

The PE-LLD making up the covering layer has a melting point Tms of, from the viewpoint of the low-pressure moldability and short-cure moldability, preferably 105°C or higher, more preferably 110°C or higher, and further preferably 115°C or higher. Further, the PE-LLD making up the covering layer has a melting point Tms of preferably 128°C or lower, more preferably 125°C or lower, and further preferably 122°C or lower. From the above viewpoint, the melting point Tms of the PE-LLD making up the covering layer is preferably from 105 to 128°C, more preferably from 110 to 125°C, and further preferably from 115 to 122°C.

The melting point Tms of the PE-LLD is determined by, based on JIS K 7121:1987, conditioning a test piece in accordance with "(2) Case of measuring melting temperature after carrying out a certain heat treatment", acquiring a DSC curve for the conditioned test piece by increasing its temperature from 30°C to 200°C at a heating rate of 10°C/min, and taking the apex temperature of the melting peak associated with the melting of the resin on the DSC curve as the melting point Tms. The conditioning is performed at a heating rate and a cooling rate of 10 °C/min. The flow rate of nitrogen gas in the measurement environment is 30 mL/min. When a plurality of melting peaks appear on the DSC curve, the apex temperature of the melting peak with the largest area is taken as the melting point.

It is preferable that the melting point Tms (°C) of the linear low density polyethylene making up the covering layer is lower than the melting point Tmc (°C) of the polypropylene-based resin making up the foamed core layer. That is, it is preferable that Tms<Tmc. In this case, the moldability of the expanded bead is improved, and in particular moldability at low pressure can be improved. From this viewpoint, it is preferable that Tmc-Tms is 3°C or higher, more preferable that Tmc-Tms is 5°C or higher, and further preferable that Tmc-Tms is 10°C or higher. On the other hand, from the viewpoint of suppressing separation between the foamed core layer and the covering layer and suppressing expanded beads from adhering to each other during the production of the expanded beads, it is preferable that Tmc-Tms is 35°C or lower, more preferable that Tmc-Tms is 25°C or lower, and further preferable that Tmc-Tms is 20°C or lower. From the above viewpoint, Tmc-Tms is preferably from 3 to 35°C, more preferably from 5 to 25°C, and further preferably from 10 to 20°C.

The linear low density polyethylene making up the covering layer is preferably a resin polymerized using a Ziegler-Natta polymerization catalyst. When the linear low density polyethylene making up the covering layer is a resin polymerized using a Ziegler-Natta polymerization catalyst, in particular short-cure moldability tends to be exhibited more consistently. Compared to a case where the same resin is polymerized using, for example, a metallocene polymerization catalyst, the molecular weight distribution is likely to be broader and there is likely to be a relatively larger amount of low-molecular-weight components. Those low-molecular-weight components are likely to melt at an early stage of the in-mold molding, improving fusion-bonding properties and dimensional stability even with a short curing time thereof.

The expanded bead described above exhibits excellent adhesive properties between the foamed core layer and the covering layer composed of a linear low density polyethylene polymerized using a Ziegler-Natta polymerization catalyst. This is thought to be, for example, because the foamed core layer is composed of a polypropylene-based resin that satisfies either (i) or (ii) above and contains a high copolymer component, and so it is more difficult for molecular chains to be separated from each other at the interface between the core layer and the covering layer during the process of laminating the covering layer onto the core layer by coextrusion described below, and also because the core layer contains a sufficient amount of components that are compatible with the ethylene component of the covering layer.

The fact that the adhesive layer between the foamed core layer and the covering layer is excellent suppresses the occurrence of peeling from the interface between the foamed core layer and the covering layer when the expanded beads molded article is bent, making it possible to consistently obtain molded articles with excellent fusion-bonding properties at the molding pressure expected from the configuration of the foamed core layer and covering layer of the expanded bead. Therefore, an expanded bead with the above configuration can be more easily molded at low pressure, and the effect of short-cure moldability is more consistently achieved.

In addition, in conventional expanded beads having a foamed core layer composed of a polypropylene-based resin and a covering layer composed of a linear low density polyethylene that covers the foamed core layer, it has been preferred to use a resin polymerized using a metallocene polymerization catalyst as the linear low density polyethylene making up the covering layer from the viewpoint that adhesive properties between the foamed core layer and the covering layer are excellent. On the other hand, the above-described expanded bead has excellent adhesive properties between the foamed core layer and the covering layer even when a resin polymerized using a Ziegler-Natta polymerization catalyst is used as the linear low density polyethylene making up the covering layer. Therefore, as described above, short-cure moldability in particular tends to be exhibited more consistently.

(Flexural modulus Ms)

The PE-LLD making up the covering layer has a flexural modulus Ms of preferably 120 MPa or more. In this case, the sliding properties and toughness of the molded article can be further improved. From this viewpoint, the flexural modulus Ms of the PE-LLD making up the covering layer is more preferably 150 MPa or more, further preferably 180 MPa or more, and particularly preferably 200 MPa or more. On the other hand, the PE-LLD making up the covering layer has the flexural modulus of preferably 600 MPa or less. In this case, the moldability of the expanded bead and the toughness of the molded article obtained can be further increased. From this viewpoint, the flexural modulus Ms of the PE-LLD making up the covering layer is more preferably 500 MPa or less, further preferably 400 MPa or less, particularly preferably 300 MPa or less, and most preferably 250 MPa or less. From the above viewpoints, the flexural modulus Ms of the PE-LLD making up the covering layer is preferably from 120 to 600 MPa, more preferably from 150 to 500 MPa, further preferably from 180 to 400 MPa, still further preferably from 200 to 300 MPa, and even still further preferably from 200 to 250 MPa.

The flexural modulus Ms of the PE-LLD is determined based on JIS K 7171:2016.

(Melt flow rate (MFR))

The PE-LLD making up the covering layer has a melt flow rate (MFR) of, for example, from the viewpoint of easier production of an expanded bead having excellent filling properties with an aspect ratio of 0.8 or more and 1.3 or less, and the viewpoint of improving the coverage rate of the foamed core layer by the covering layer to more stably exhibit the object and advantageous effects of the present application, preferably from 0.5 to 5.0 g/10 min, more preferably from 1.0 to 3.5 g/10 min, and further preferably from 1.5 to 2.5 g/10 min.

The MFR of the PE-LLD is measured at a temperature of 190°C and a load of 2.16 kg in accordance with JIS K 7210-1:2014.

The covering layer may contain other polyethylene-based resins other than a linear low density polyethylene, such as a low density polyethylene (PE-LD) and a high-density polyethylene (PE-HD). However, from the viewpoint of further improving the action and effect of the linear low density polyethylene, the proportion of the linear low density polyethylene in the resin making up the covering layer is preferably 80% by mass or more, more preferably 90% by mass or more, and further preferably 100% by mass, that is, the resin making up the covering layer contains only the linear low density polyethylene as a polymer.

The covering layer may contain other polymers and additives other than the polyethylene-based resin as appropriate, as long as the advantageous effects of the present invention are not inhibited. Examples of the other polymers include thermoplastic resins such as a polypropylene-based resin and a polystyrene resin, thermoplastic elastomers, and the like. The amount of the other polymers in the covering layer is, based on the total mass of the covering layer, preferably 10% by mass or less, more preferably 5% by mass or less, further preferably 3% by mass or less, and particularly preferably 0% by mass, that is, the covering layer contains only polyethylene-based resin as a polymer. Examples of the additives include a cell adjusting agent, a lubricant, a flame retardant, a flame retardant synergist, a colorant, a cell nucleating agent, a plasticizer, an antistatic agent, an antioxidant, a UV absorbing agent, a light stabilizer, a conductive filler, an antimicrobial agent, and the like.

[Properties of polypropylene-based resin expanded bead]

The polypropylene-based resin expanded bead of the present invention has a foamed core layer composed of a polypropylene-based resin and a covering layer covering the foamed core layer, wherein the covering layer is composed of a linear low density polyethylene, a mass ratio of the covering layer to the foamed core layer is 0.005 or more and 0.05 or less, and the polypropylene-based resin making up the foamed core layer satisfies the above-described (i) or above-described (ii). The expanded bead preferably further has the following properties.

<Mass ratio of covering layer to foamed core layer>

The mass ratio of the covering layer to the foamed core layer, [mass of covering layer/mass of foamed core layer], is 0.005 or more and 0.05 or less. If the mass ratio of the covering layer is too large, although the effect of reducing molding pressure is sufficient, short-cure moldability is harmed. In particular, when trying to produce a molded article having a low apparent density, it may not be possible to suppress dimensional change in the molded article if a short curing time is set. In other words, a long curing step is required. From the viewpoint of further suppressing significant shrinkage and deformation of the molded article after in-mold molding, the mass ratio of the covering layer to the foamed core layer is preferably 0.045 or less, more preferably 0.04 or less, and further preferably 0.035 or less. On the other hand, if the mass ratio of the covering layer is too small, the effect of the covering layer in reducing the molding pressure is not fully exerted, and it may not be possible to suppress the significant shrinkage and deformation that occur when the curing time is shortened. From the viewpoint that shrinkage and deformation can be suppressed even if the curing time is shortened, the mass ratio of the covering layer to the foamed core layer is preferably 0.01 or more, more preferably 0.015 or more, and further preferably 0.02 or more. The mass ratio of the covering layer to the foamed core layer is preferably 0.01 or more and 0.045 or less, more preferably 0.015 or more and 0.04 or less, and further preferably 0.02 or more and 0.035 or less. The mass ratio of the covering layer to the foamed core layer in the expanded bead corresponds to the mass ratio of the covering layer to the core layer in the multi-layered resin particle described below.

As described above, adjusting the mass ratio of the covering layer makes it easier to suppress shrinkage and deformation of the molded article even when the curing time is shortened. The reason for this is thought to be as follows. To reduce the weight of the molded article, typically, expanded beads having a low apparent density are used for in-mold molding. Further, the covering layer of the expanded beads is usually composed of, for example, a substantially non-foamed resin. Therefore, when the mass ratio of the covering layer is high, the apparent density of the foamed core layer needs to be further reduced in order to reduce the apparent density of the overall expanded bead. As a result, it is presumed that the resistance of the molded article to shrinkage and deformation after mold release tends to decrease. Moreover, the covering layer is typically composed of a linear low density polyethylene, which typically has a lower melting point than the polypropylene-based resin that constitutes the foamed core layer. Therefore, if the mass ratio of the covering layer is high, it is presumed that the expanded bead is more susceptible to the effects of heat from the steam during in-mold molding, and the overall expanded bead tends to shrink.

From the above, if the mass ratio of the covering layer is too high, particularly when trying to produce a molded article with a low apparent density, it is thought that although the molding pressure of the expanded bead can be reduced, it is difficult to suppress significant shrinkage and deformation of the molded article in short-cure molding. Therefore, the expanded bead of the present invention can achieve a high level of both low-pressure moldability and short-cure moldability by forming the foamed core layer from a specific polypropylene-based resin and by forming the expanded bead with the foamed core layer and covering layer composed of a linear low density polyethylene in a specific mass ratio.

From the viewpoint of more reliably increasing short-cure moldability, the average thickness (Tt) of the covering layer is preferably 5 $\mu$m or less, more preferably 4 $\mu$m or less, further preferably 3.5 $\mu$m or less, and still further preferably 3 $\mu$m or less. Further, from the viewpoint of fully exerting the molding pressure reduction effect of the covering layer and more reliably suppressing significant shrinkage and deformation when the curing time is shortened, the average thickness (Tt) of the covering layer is preferably 0.1 $\mu$m or more, more preferably 0.3 $\mu$m or more, further preferably 0.5 $\mu$m or more, and still further preferably 1 $\mu$m or more. From the above viewpoints, the average thickness (Tt) of the covering layer is preferably 0.1 $\mu$m or more and 5 $\mu$m or less, more preferably 0.3 $\mu$m or more and 4 $\mu$m or less, further preferably 0.5 $\mu$m or more and 3.5 $\mu$m or less, and still further preferably 1 $\mu$m or more and 3 $\mu$m or less.

Herein, average thickness (Tt) of the covering layer is a value calculated using the following formulas (1), (2), and (3). Formulas (1) to (3) are derived as the average thickness (Tt) of the covering layer of an expanded bead obtained by expanding cylindrical multi-layered resin particles having a covering layer into a similar shape. However, even if the expanded bead of the present invention is obtained from multi-layered resin particles of a shape other than cylindrical, the average thickness (Tt) of the covering layer is calculated using the following formulas (1), (2), and (3). The physical properties of the multi-layer expanded bead used to calculate the average thickness (Tt) of the covering layer of the expanded bead are determined from a group of multi-layer expanded beads obtained by expanding a group of multi-layer resin particles having the physical properties of the multi-layer resin particles used to calculate the average thickness (Tt).

$$Pd = \{(4 \times W) \div (\pi \times Ld \times Db)\}^{(1/3)} \ (1)$$

In the above formula, Pd (cm) is the diameter of the cylindrical multi-layer expanded bead, W (g) is the mass of the multi-layer resin particle, Db (g/cm$^3$) is the apparent density of the multi-layer expanded bead, and Ld is the aspect ratio L/D of the obtained expanded bead.

$$Cd = \{Pd^2 - (4 \times R \times W) \div (\pi \times Pd \times Ld \times \rho)\}^{(1/2)} \ (2)$$

In the above formula, Cd (cm) is the diameter of the core layer of the cylindrical multi-layer expanded bead, R (dimensionless) is the mass ratio of the resin in the covering layer of the multi-layered resin particle (mass of resin in the covering layer (S) / (mass of resin in the covering layer (S) + mass of resin in the core layer (C))), and $\rho$ (g/cm$^3$) is the density of the resin in the covering layer.

$$Tt\ (\mu m) = \{(Pd-Cd) \div 2\} \times 10,000 \ (3)$$

The method for calculating the apparent density Db of the expanded beads is as follows. First, a group of expanded beads is left to stand for 24 hours in an environment of 50% relative humidity, 23°C temperature, and 1 atm atmospheric pressure to condition the expanded beads. After measuring the mass (unit: g) of this group of expanded beads, the expanded beads are submerged in a graduated cylinder containing water at 23°C using a wire mesh or the like, and the volume (unit: L) of the group of expanded beads is determined by subtracting the volume of the wire mesh or the like from the rise in the liquid level. The apparent density (unit: g/cm$^3$) of the expanded beads can then be calculated by converting the value obtained by dividing the mass of the group of expanded beads by the volume of the group of expanded beads.

<Bulk expansion ratio>

The polypropylene-based resin expanded bead has a bulk expansion ratio of preferably 50 times or less, more preferably 45 times or less, further preferably 40 times or less, and particularly preferably 35 times or less. On the other hand, the bulk expansion ratio of the polypropylene-based resin expanded beads is preferably 5 times or more, more preferably 10 times or more, further preferably 15 times or more, and particularly preferably 20 times or more. From the above viewpoints, the bulk expansion ratio of the polypropylene-based resin expanded beads is preferably from 5 to 50 times, more preferably from 5 to 45 times, further preferably from 10 to 45 times, still further preferably from 15 to 40 times, and particularly preferably from 20 to 35 times. When the bulk expansion ratio of the polypropylene-based resin expanded bead is within the above range, the advantageous effects of the present invention can be fully exhibited, low-pressure moldability can be improved, and curing time can be shortened.

The bulk expansion ratio of the expanded beads is determined as follows. First, a group of expanded beads is left to stand for 24 hours in an environment of 50% relative humidity, 23°C temperature, and 1 atm atmospheric pressure to condition the expanded beads. Expanded beads are randomly taken out from a group of conditioned expanded beads, and charged into a graduated cylinder with a volume of 1 L. A large number of expanded beads are charged up to the 1 L gradation mark in a manner such that the expanded beads naturally settle. The mass of the charged expanded beads $W1$ (g) is divided by the volume $V1$ (1 (L)) to obtain ($W1/V1$), which is converted into units to obtain the bulk density (kg/m$^3$) of the expanded beads. Then, the density (kg/m$^3$) of the resin making up the foamed core layer of the expanded bead is divided by the bulk density (kg/cm$^3$) of the expanded beads, which is determined in advance.

<Average cell diameter>

The average cell diameter of the polypropylene-based resin expanded beads is, from the viewpoint of further enhancing the moldability of the expanded bead, preferably 80 $\mu$m or more, more preferably 100 $\mu$m or more, and further preferably 150 $\mu$m or more. On the other hand, from the viewpoint of further improving the surface smoothness of the expanded beads molded article obtained, the average cell diameter of the polypropylene-based resin expanded beads is preferably 300 $\mu$m or less, more preferably 250 $\mu$m or less, further preferably 220 $\mu$m or less. From the above viewpoints, the average cell diameter of the polypropylene-based resin expanded beads is preferably from 80 to 300 $\mu$m, more preferably from 100 to 250 $\mu$m, further preferably from 150 to 250 $\mu$m, and still further preferably from 150 to 220 $\mu$m.

The average cell diameter of the expanded beads is measured as follows. From a group of expanded beads, 20 or more expanded beads are randomly selected. The expanded beads are cut through the center and divided into two parts, and an enlarged photograph of the entire cross section is taken using a microscope such as a scanning electron microscope. In each cross-sectional photograph, four line segments are drawn at equal angles (45°) from the outermost surface of the expanded bead through the center to the outermost surface on the opposite side. The cell diameter of each expanded bead is determined by measuring the number of cells that intersect with each line segment and dividing the total length of the four line segments by the total number of cells that intersect with the line segments. The value obtained by arithmetic averaging these values is defined as the average cell diameter of the expanded beads.

<Closed cell content>

The closed cell content of the expanded bead is preferably 85% or more, more preferably 90% or more, and further preferably 95% or more. In this case, the moldability of the expanded bead and the rigidity of the expanded beads molded article obtained and the like can be further improved. The closed cell content of the expanded bead can be measured using an air comparison pycnometer based on ASTM D2856-70.

<High temperature peak>

The expanded bead preferably has a crystal structure in which, on a differential scanning calorimetry (DSC) curve obtained by heating expanded beads from 23°C to 200°C at a heating rate of 10°C/min by heat flux DSC, one or more endothermic peaks (hereinafter referred to as "high-temperature peak") appear on the higher temperature side than the apex of the endothermic peak (hereinafter referred to as "specific peak") specific to the polypropylene-based resin that constitutes the core layer. In this case, the moldability of the expanded bead can be further improved, and the rigidity of the expanded beads molded article obtained can be further increased. From this viewpoint, the heat of fusion of the high-temperature peak is preferably from 5 to 50 J/g, more preferably from 8 to 40 J/g, and further preferably from 10 to 30 J/g.

<Other properties>

The shape of the expanded bead is not particularly limited, but is, for example, a columnar shape, such as a cylindrical shape.

The aspect ratio L/D of the polypropylene-based resin expanded bead is, from the viewpoint of improving the filling properties of the expanded bead and improving the rigidity of the molded article, preferably 0.8 or more and 1.4 or less. Further, the aspect ratio L/D is more preferably 0.9 or more and 1.3 or less, and further preferably more than 0.9 and less than 1.3.

The aspect ratio L/D of the expanded bead is determined by measuring, for 100 randomly selected expanded beads, the maximum length (L) in the axis direction of the expanded bead and the maximum cross-sectional diameter (D) of the cross section of the bead in the direction orthogonal to the length direction of the maximum length with a caliper, calculating the ratio (L/D), and taking the arithmetic average of the values.

The expanded beads may also have a cylindrical shape with a through-hole running axially. From the viewpoint of further improving the appearance of the molded article obtained, it is preferable that the expanded beads do not have a through-hole.

[Method for producing polypropylene-based resin expanded bead]

The method for producing the polypropylene-based resin expanded bead of the present invention is not particularly limited as long as the polypropylene-based resin expanded bead has a foamed core layer composed of a polypropylene-based resin and a covering layer covering the foamed core layer, wherein the covering layer is composed of a linear low density polyethylene, a mass ratio of the covering layer to the foamed core layer is 0.005 or more and 0.05 or less, and the polypropylene-based resin making up the foamed core layer satisfies the above-described (i) or above-described (ii). However, the polypropylene-based resin expanded bead of the present invention is preferably produced by the following method.

A preferable method for producing the polypropylene-based resin expanded bead of the present invention comprises the following steps (A) to (C):

step (A): a dispersion step of dispersing a multi-layered resin particle having a core layer that is composed of a polypropylene-based resin and that is in a non-foamed state and a covering layer that is composed of a linear low density polyethylene and that covers the core layer in a dispersing medium in a sealable vessel;

step (B): a blowing agent impregnation step of impregnating the multi-layered resin particle with a blowing agent; and

step (C): an expansion step of producing an expanded bead by releasing the expandable multi-layered resin particle impregnated with the blowing agent together with the dispersing medium from in the sealable vessel into an atmosphere having a lower pressure than the pressure in the sealable vessel to form a foamed core layer by expanding at least the core layer.

The order of step (A) and step (B) is not limited, and step (A) and step (B) may be performed simultaneously. However, from the viewpoint of efficient production, it is preferable to perform step (B) after step (A).

<Multi-layered resin particle and method for producing multi-layered resin particle>

The multi-layered resin particle used in step (A) is a multi-layered resin particle having a non-foamed core layer that is composed of a polypropylene-based resin and a covering layer composed of a linear low density polyethylene that covers the core layer. The multi-layered resin particle used in step (A) is preferably a multi-layered resin particle having a non-foamed cylindrical core layer composed of a polypropylene-based resin and a covering layer composed of a linear low density polyethylene that is laminated by coextrusion on the lateral surface of the core layer and covers the core layer.

In the method for producing the multi-layered resin particle, for example, an extruder for forming the core layer, an extruder for forming the covering layer, and an extruder that has a coextrusion die for forming a multi-layered strand and that is arranged on the exit side of those extruders can be used. The polypropylene-based resin making up the core layer and the optionally-added additives are fed to the extruder for forming the core layer, and melt-kneaded to form a core layer-forming melt-kneaded material. The linear low density polyethylene making up the covering layer and the optionally-added additives are fed to the extruder for forming the covering layer, and melt-kneaded to form a covering layer-forming melt-kneaded material. The core layer-forming melt-kneaded material and the covering layer-forming melt-kneaded material are introduced into the coextrusion die for forming a multi-layered strand, and intermixed to form a composite having a core-sheath structure composed of a core layer in a non-foamed state and a covering layer in a non-foamed state that is covering the lateral surface of the core layer. Then, a multi-layered resin particle having a core layer in a non-foamed state and a covering layer that is covering the core layer can be obtained by extruding the composite in the form of a strand through a small hole in the die arranged in the tip of the extruder, cooling in water, and then cutting into a predetermined mass with a pelletizer (strand cut method). As the method for cutting the extruded composite, in addition to the method described above, an underwater cut method, in which the composite is extruded and cut in water, a hot cut method, in which the composite is cut immediately after extrusion into air, and the like can be adopted.

The particle size of the multi-layered resin particle is preferably from 0.1 to 5.0 mm, and more preferably from 0.5 to 3.0 mm.

The mass of the multi-layered resin particles is preferably adjusted to be from 0.1 to 20 mg, more preferably from 0.2 to 10 mg, further preferably from 0.3 to 5 mg, and still further preferably from 0.4 to 2 mg. The mass of the multi-layered resin particle is calculated by dividing the total mass of 100 randomly selected multi-layered resin particles by 100.

The mass ratio of the covering layer to the foamed core layer of the expanded bead can be adjusted based on the mass ratio of the covering layer to the non-foamed core layer of the multi-layered resin particle. From this viewpoint, the mass ratio of the covering layer to the core layer of the multi-layered resin particle is 0.005 or more and 0.05 or less, preferably 0.01 or more and 0.045 or less, more preferably 0.015 or more and 0.04 or less, and further preferably 0.02 or more and 0.035 or less.

To the multi-layered resin particle comprising the core layer in a non-foamed state and the covering layer, additives can be added, if necessary, such as a cell adjusting agent, a flame retardant, a flame retardant synergist, a cell nucleating agent, a plasticizer, an antistatic agent, an antioxidant, a UV absorbing agent, a light stabilizer, a conductive filler, and an antimicrobial agent. In the case where additives are added, they can be added in step (A). Examples of the cell adjusting agent include: inorganic powders such as talc, mica, zinc borate, calcium carbonate, silica, titanium oxide, gypsum, zeolite, borax, aluminum hydroxide, and carbon; and organic powders such as phosphate nucleating agents, phenol nucleating agents, amine nucleating agents, and polyethylene fluoride resin powders. In the case where the cell adjusting agent is added, the amount of the cell adjusting agent is preferably 0.01 to 1 part by mass based on 100 parts by mass of the polymer making up the core layer of the multi-layered resin particle.

The particle size, average mass, and mass ratio of the covering layer to the core layer of the multi-layered resin particles can be adjusted by cutting the multi-layered resin particle while appropriately changing the resin discharge speed, take-up speed, cutter speed, and the like in the strand cut method described above.

<Step (A)>

In step (A), for example, the multi-layered resin particle can be dispersed in a dispersing medium in a vessel that can be sealed and can withstand heating and pressurization, such as an autoclave, using a stirrer, for example.

The dispersing medium is not particularly limited as long as it is a dispersing medium that does not dissolve the multi-layered resin particle. Examples thereof include water and alcohols such as ethylene glycol, glycerin, methanol, and ethanol, and among the above, water is preferred.

In step (A), in order to prevent multi-layered resin particles from fusion bonding to each other, it is preferable to further add a dispersant to the dispersing medium. Examples of the dispersant include: organic dispersants such as polyvinyl alcohol, polyvinylpyrrolidone, and methylcellulose; and poorly soluble inorganic salts such as aluminum oxide, zinc oxide, kaolin, mica, magnesium phosphate, and tricalcium phosphate. These dispersants can be used singly or in combination of two or more types. Among the above, a poorly soluble inorganic salt is preferred, and kaolin is more preferred, because of its easy handling. In the case where a dispersant is added, the amount of dispersant added is preferably about 0.001 to 5 parts by mass based on 100 parts by mass of the multi-layered resin particle.

To the dispersing medium, a surfactant can also be further added as a dispersion aid. Examples of the surfactant include sodium dodecyl benzenesulfonate, sodium alkylsulfonate, sodium oleate, sodium lauryl sulfate, sodium polyoxyethylene alkyl ether phosphate, sodium polyoxyethylene alkyl ether sulfate, and other anionic surfactants and nonionic surfactants that are generally used in suspension polymerization. In the case where a surfactant is added, the amount of surfactant added is preferably about 0.001 to 1 part by mass based on 100 parts by mass of the multi-layered resin particle.

<Step (B)>

In step (B), for example, an expandable multi-layered resin particle can be obtained by heating the polypropylene-based resin making up the core layer to a temperature equal to or higher than the temperature at which it softens, and impregnating the polypropylene-based resin with a blowing agent.

The blowing agent is not particularly limited as long as it can expand the multi-layered resin particle. Examples of the blowing agent include: inorganic physical blowing agents such as air, nitrogen, carbon dioxide, argon, helium, oxygen, and neon; and organic physical blowing agents including aliphatic hydrocarbons such as propane, normal butane, isobutane, normal pentane, isopentane, and normal hexane, alicyclic hydrocarbons such as cyclohexane and cyclopentane, halogenated hydrocarbons such as chlorofluoromethane, trifluoromethane, 1,1-difluoroethane, 1,1,1,2-tetrafluoroethane, methyl chloride, ethyl chloride, and methylene chloride, and dialkyl ethers such as dimethyl ether, diethyl ether, and methyl ethyl ether. Among the above, it is preferable to use an inorganic physical blowing agent that does not destroy the ozone layer and is inexpensive, it is more preferable to use nitrogen, air, and carbon dioxide, and it is further preferable to use carbon dioxide. These blowing agents may be used singly or in combination of two or more types.

The amount of blowing agent added is determined by taking into account the bulk density of the desired expanded beads, the type of polypropylene-based resin, the type of blowing agent, and the like, but in the case of adding an organic physical blowing agent, based on 100 parts by mass of multi-layered resin particles, the amount of blowing agent added is preferably from 5 to 50 parts by mass, and in the case of adding an inorganic physical blowing agent, based on 100 parts by mass of multi-layered resin particles, the amount of blowing agent added is preferably from 0.1 to 30 parts by mass, and more preferably from 0.5 to 15 parts by mass.

The heating temperature in step (B) is preferably equal to or higher than the melting point of the polypropylene-based resin, and no higher than the melting point +80°C, and specifically is preferably from 100°C to 230°C. The time for holding at the heating temperature is preferably 1 minute or more, and more preferably 20 minutes or more, and preferably 100 minutes or less, and more preferably 60 minutes or less. That is, the time for holding at the above heating temperature is preferably from 1 to 100 minutes, and more preferably from 20 to 60 minutes.

<Step (C)>

In step (C), for example, an expanded bead can be produced by releasing the heated expandable multi-layered resin particle impregnated with the blowing agent in step (B) into an atmosphere having a lower pressure than the pressure in the sealable vessel to foam and expand at least the core layer to form a foamed core layer.

Specifically, while the pressure inside the sealable vessel is held at a pressure equal to or higher than the vapor pressure of the blowing agent, one end of the vessel that is below the water surface in the sealable vessel is opened so that the expandable multi-layered resin particles impregnated with the blowing agent are released together with the dispersing medium from the inside of the sealable vessel into an atmosphere having a lower pressure than the pressure inside the sealable vessel, usually atmospheric pressure, which causes at least the core layer of the expandable multi-layered resin particles to expand into a foamed core layer, enabling an expanded bead having a multi-layered structure that comprises a foamed core layer and a covering layer that covers the foamed core layer to be produced. Further, the expanded bead may also be produced by cooling the expandable multi-layered resin particle obtained by step (B), removing the cooled expandable multi-layered resin particle, and heating the expandable multi-layered resin particle with a heating medium such as hot air or steam to cause the particle to expand.

In step (C), the temperature during expansion is preferably from 110°C to 170°C. Further, the pressure in the sealable vessel is preferably 0.5 MPa (G) or more and 5 MPa (G) or less. Note that "0.5 MPa (G)" means 0.5 MPa in gauge pressure.

Although the above steps (A) to (C) are preferably carried out as a series of steps in a single sealable vessel, they may be performed as separate steps in such a way that the multi-layered resin particle and the like are removed in each step, added into a sealable vessel again, and subjected to the next step.

In addition, in the above steps, during heating in the sealable vessel, it is preferable to perform a first-stage holding step of holding at a temperature of (melting point of the polypropylene-based resin making up the core layer -20°C) or more and less than (melting end temperature of the polypropylene-based resin making up the core layer) for a sufficient period of time, preferably about 10 to 60 minutes. Further, after that, it is preferable to perform a second-stage holding step of adjusting the temperature from (melting point of the polypropylene-based resin -15°C) to (melting end temperature of the polypropylene-based resin +10°C), and, if necessary, further holding at that temperature for a sufficient period of time, preferably 10 to 60 minutes. After that, an expanded bead having a crystal structure exhibiting the above-described high-temperature peak can be obtained by releasing the expandable resin particles containing the blowing agent from the sealable vessel into a low pressure to cause the resin particles to expand.

The expanded bead obtained as described above can also be subjected to a pressurization treatment with an inorganic gas such as air to increase internal pressure in cells, and then heated with steam or the like to cause expansion (second-stage expansion), thereby enabling an expanded bead having an even higher expansion ratio (lower apparent density) to be obtained.

<Production of expanded beads molded article>

An expanded beads molded article can be obtained by in-mold molding expanded beads. However, by using the polypropylene-based resin expanded bead of the present invention, the steam pressure during in-mold molding can be significantly reduced, and an expanded beads molded article with a desired shape and excellent appearance can be obtained even if the curing time is shortened.

In-mold molding of expanded beads can be carried out by filling expanded beads into a mold for molding and molding them by heating using a heating medium such as steam. Specifically, the expanded beads are filled into a mold for molding, and then a heating medium such as steam is introduced into the mold for molding so that the expanded beads are heated to cause the expanded beads to undergo secondary expansion and the surface of the beads to melt, and the beads to fuse together, thereby obtaining an expanded beads molded article to which the shape of the molding space has been imparted. Further, the in-mold molding is preferably performed by a pressurization molding method (for example, JP 51-22951 B) in which expanded beads are subjected to a pre-pressurization treatment with a pressurized gas such as air to increase the pressure in cells of the expanded bead so that the pressure in the cells is adjusted to a pressure 0.01 to 0.3 MPa higher than atmospheric pressure, the expanded beads are then filled into a mold for molding under atmospheric pressure or under reduced pressure, and subsequently, a heating medium such as steam is supplied into the mold to heat and fusion bond the expanded beads. Alternatively, the molding can also be performed by a compression filling molding method (JP 4-46217 B) in which a mold for molding that has been pressurized to atmospheric pressure or higher by a compressed gas is filled with expanded beads that have been pressurized to that pressure or higher, and then a heating medium such as steam is supplied into the cavity to carry out heating, causing the expanded beads to be heated and fusion bonded. In addition, the molding can also be performed by an ambient pressure filling molding method (JP 6-49795 B) in which expanded beads with a high secondary expanding force obtained under special conditions are filled into the cavity of a mold for molding under atmospheric pressure or under reduced pressure, after which a heating medium such as steam is then supplied to carry out heating, thereby heating and fusion bonding the expanded beads, or by the method in which the above methods are combined (JP 6-22919 B) or the like.

EXAMPLES

Hereinafter, the present invention will be described in detail with reference to Examples. However, the present invention is not limited by these examples by any means.

For the resins and expanded beads used in Examples and Comparative Examples, the following measurements or evaluations were carried out. Note that the physical properties of the expanded bead were measured using expanded beads that had been conditioned by allowing them to stand for 24 hours under conditions of 50% relative humidity, 23°C, and 1 atm.

[Measurement and evaluation]

<Raw material resin>

(Monomer component amount of polypropylene-based resin)

The monomer component amount of the polypropylene-based resins (specifically, ethylene-propylene copolymer, ethylene-propylene-butene copolymer) was determined using a known method based on IR spectroscopy. Specifically, the monomer component amount was determined by the method described in the Polymer Analysis Handbook (edited by the Polymer Analysis Research Forum of the Japan Society for Analytical Chemistry, published in January 1995, published by Kinokuniya Shoten, page numbers and item names: 615-616 "II.2.3 2.3.4 Propylene/ethylene copolymer", 618-619 "II.2.3 2.3.5 Propylene/butene copolymer"), that is, by a method of quantifying the absorbance of the ethylene component and the butene component from the relationship between a value corrected by a predetermined coefficient and the thickness of the film-like test piece, and the like.

More specifically, first, a plurality of test pieces having different thicknesses were produced by hot-pressing the polypropylene-based resin at 180°C to form film-like pieces. Next, the IR spectrum of each test piece was measured to determine the absorbance at 722 cm$^{-1}$ and 733 cm$^{-1}$ ($A_{722}$, $A_{733}$) attributable to ethylene, and the absorbance at 766 cm$^{-1}$ ($A_{766}$) attributable to butene. Next, the ethylene component amount (unit: % by mass) in the polypropylene-based resin was calculated for each test piece using the following formulas (4) to (6). The arithmetic average of the ethylene component amount obtained for each test piece was taken as the ethylene component amount (unit: % by mass) of the polypropylene-based resin.

$$(K'_{733})_c = 1/0.96\{(K'_{733})_a - 0.268(K'_{722})_a\} \ (4)$$

$$(K'_{722})_c = 1/0.96\{(K'_{722})_a - 0.150(K'_{733})_a\} \ (5)$$

$$\text{Ethylene component amount} = 0.575\{(K'_{722})_c + (K'_{733})_c\} \ (6)$$

In formulas (4) to (6), $K'_a$ is the apparent absorption coefficient at each wave number ($K'_a = A/\rho t$), $K'_c$ is the corrected absorption coefficient, A is the absorbance, $\rho$ is the density of the resin (unit: g/cm$^3$), and t is the thickness of the film-like test piece (unit: cm). It is noted that the above formulas (4) to (6) can be applied to random copolymers.

Further, the butene component amount (unit: % by mass) in the polypropylene-based resin was calculated for each test piece using the following formula (7). The arithmetic average of the butene component amount obtained for each test piece was taken as the butene component amount (unit: % by mass) of the polypropylene-based resin.

$$\text{Butene component amount} = 12.3 \, (A_{766}/L) \, (7)$$

In formula (7), A is absorbance, and L is the thickness of the film-like test piece (unit: mm).

(Flexural modulus)

The flexural modulus of the resin was measured based on the following method. First, the resin was heat pressed at 230°C to produce a sheet of 4 mm thickness, and an 80 mm long × 10 mm wide × 4 mm thick test piece was cut from the sheet. The flexural modulus of this test piece was determined in accordance with JIS K 7171:2016. The radius R1 of the indenter and the radius R2 of the supporting table were both 5 mm, the distance between the supporting points was 64 mm, and the test rate was set to 2 mm/min.

(MFR)

The MFR of the resin was measured at a temperature of 190°C or 230°C and a load of 2.16kg in accordance with JIS K 7210-1:2014. When measuring the MFR of the polypropylene-based resin, the temperature of 230°C was used, and when measuring the MFR of the linear low density polyethylene, the temperature of 190°C was used.

(Melting point (Tm))

The melting point of the resin was determined based on JIS K 7121:1987. Specifically, each test piece was conditioned at a heating rate and a cooling rate of 10 °C/min in accordance with "(2) Case of measuring melting temperature after carrying out a certain heat treatment". A DSC curve was acquired for the conditioned test piece by increasing its temperature from 30°C to 200°C at a heating rate of 10°C/min, and the melting point was determined as the apex temperature of the melting peak associated with the melting of the resin on the DSC curve. The conditioning was performed at a heating rate and a cooling rate of 10 °C/min. The flow rate of nitrogen gas in the measurement environment was 30 mL/min. When a plurality of melting peaks appeared on the DSC curve, the apex temperature of the melting peak with the largest area was taken as the melting point. The measurement device used was a heat flux differential scanning calorimeter (manufactured by SII Nanotechnology Co., Ltd., model number: DSC7020).

(Density)

The density of the resin was measured according to method B (pycnometer method) described in JIS K 7112:1999. The density of all the polypropylene-based resins used in the present invention was 900 kg/m$^3$.

(Heat of fusion)

The heat of fusion of the linear low density polyethylene was determined by, based on JIS K 7122:1987, conditioning each test piece in accordance with "(2) Case of measuring heat of fusion after carrying out a certain heat treatment", acquiring a DSC curve for the conditioned test piece by increasing its temperature from 30°C to 200°C at a heating rate of 10°C/min, and determining the heat of fusion from the area of the melting peak associated with the melting of the resin on the DSC curve. The conditioning was performed at a heating rate and a cooling rate of 10 °C/min. The flow rate of nitrogen gas in the measurement environment was 30 mL/min. When a plurality of melting peaks appeared on the DSC curve, the heat of fusion determined from the melting peak with the largest area was taken as the heat of fusion of the linear low density polyethylene. The measurement device used was a heat flux differential scanning calorimeter (manufactured by SII Nanotechnology Co., Ltd., model number: DSC7020).

(Crystallization temperature)

The crystallization temperature of the linear low density polyethylene was determined based on JIS K 7121:1987. Specifically, the crystallization temperature was determined by acquiring a DSC curve by heating each test piece from 23°C to 200°C at a heating rate of 10°C/min, holding the test piece at 200°C for 10 minutes, and then cooling the test piece to 30°C at a cooling rate of 10 °C/min, and taking the apex temperature of the exothermic peak associated with the crystallization of the resin on the DSC curve as the crystallization temperature. The flow rate of nitrogen gas in the measurement environment was 30 mL/min. When a plurality of exothermic peaks appeared on the DSC curve, the apex temperature of the exothermic peak with the largest area was taken as the crystallization temperature. The measurement device used was a heat flux differential scanning calorimeter (manufactured by SII Nanotechnology Co., Ltd., model number: DSC7020).

<Expanded bead>

(Bulk expansion ratio)

The bulk expansion ratio of the expanded beads was determined as follows. Expanded beads were randomly taken out from a group of expanded beads, and charged into a graduated cylinder with a volume of 1 L. A large number of expanded beads were charged up to the 1 L gradation mark in a manner such that the expanded beads naturally settled. The mass of the charged expanded beads W1 (g) was divided by the volume V1 (1 (L)) to obtain (W1/V1), which was converted into units to obtain the bulk density (kg/m$^3$) of the expanded beads. Then, the bulk expansion ratio was calculated by dividing the density (kg/m$^3$) of the polypropylene-based resin making up the foamed core layer of the expanded bead by the bulk density (kg/m$^3$) of the expanded beads, which was determined in advance.

(Heat of fusion of high-temperature peak)

The heat of fusion at the high-temperature peak of the expanded bead was determined as follows. About 3 mg of expanded beads were collected, and the expanded beads were heated from 23°C to 200°C at a heating rate of 10°C/min using a differential scanning calorimeter (DSC Q1000, manufactured by TA Instruments) to obtain a DSC curve having an endothermic peak ("resin intrinsic peak") due to melting specific to the polypropylene-based resin and one or more melting peaks (high-temperature peak) on the higher temperature side of the endothermic peak. In the following description, the resin intrinsic peak will be referred to as A, and the high-temperature peak that appears on the higher temperature side will be referred to as B. A straight line ($\alpha$-$\beta$) was drawn connecting a point $\alpha$ on the DSC curve corresponding to 80°C and a point $\beta$ on the DSC curve corresponding to a melting end temperature T of the expanded bead. The "melting end temperature T" refers to the intersection between the DSC curve on the high temperature side of the high-temperature peak B and the high temperature side baseline. Next, a straight line was drawn parallel to the vertical axis of the graph from a point $\gamma$ on the DSC curve, which corresponds to the valley between the resin intrinsic peak A and the high-temperature peak B, and the point where that line intersected with the straight line ($\alpha$-$\beta$) was defined as $\delta$. The area of the high-temperature peak B is the area of the portion bounded by the curve of the high-temperature peak B portion of the DSC curve, the line segment ($\delta$-$\beta$), and the line segment (y-$\beta$), and this area was taken as the heat of fusion of the high-temperature peak.

(Closed cell content)

The closed cell content of the expanded bead was measured based on ASTM D2856-70 using an air comparison pycnometer. Specifically, first, a measurement sample was collected from conditioned expanded beads so that the bulk volume, that is, the value of the marked line when the expanded beads had naturally settled in a graduated cylinder, was approximately 20 cm$^3$, and the apparent volume of the measurement sample was then measured. The apparent volume of the measurement sample is, specifically, the volume corresponding to the amount of rise in the liquid level when the measurement sample was submerged in a graduated cylinder containing ethanol at a temperature of 23°C. The measurement sample whose apparent volume had been measured was thoroughly dried, and the true volume of the measurement sample to be measured was measured using an air comparison pycnometer 930 manufactured by Toshiba Beckman Co., Ltd., in accordance with procedure C described in ASTM-D2856-70. Then, using the values of these volume, the closed cell content of the measurement sample was calculated based on the following formula (8). The above operation was carried out five times using different measurement samples, and the arithmetic average value of the closed cell content obtained from these five measurements was defined as the closed cell content of the expanded bead.

$$\text{Closed cell content (\%)} = (Vx\text{-}W/\rho) \times 100/(Va\text{-}W/\rho) \ (8)$$

Note that, in the above formula (8), Vx (unit: cm$^3$) is the true volume of the expanded bead (that is, the sum of the volume of the resin making up the expanded bead and the total cell volume of the closed cell portion within the expanded

bead), Va (unit: cm$^3$) is the apparent volume of the expanded bead (that is, the volume measured from the rise in the liquid level when the expanded bead was submerged in a graduated cylinder containing ethanol), W (unit: g) is the mass of the measurement sample, and ρ (unit: g/cm$^3$) is the density of the polypropylene-based resin making up the foamed core layer.

(Average cell diameter)

The average cell diameter of the expanded beads was measured as follows. From a group of expanded beads, 20 expanded beads were randomly selected. The expanded beads were cut through the center and divided into two parts, and an enlarged photograph of the entire cross section was taken using a scanning electron microscope. In each cross-sectional photograph, four line segments were drawn at equal angles (45°) from the outermost surface of the expanded bead through the center to the outermost surface on the opposite side. The cell diameter of each expanded bead was determined by measuring the number of cells that intersect with each line segment and dividing the total length of the four line segments by the total number of cells that intersect with the line segments. The value obtained by arithmetic averaging these values was defined as the average cell diameter of the expanded beads.

(Aspect ratio (L/D))

The aspect ratio L/D of the expanded bead was determined by measuring, for 100 randomly selected expanded beads, the maximum length (L) in the axis direction and the maximum cross-sectional diameter (D) of the cross section of the particle in the direction orthogonal to the length direction of the maximum length with a caliper, calculating the ratio (L/D), and taking the arithmetic average of the values.

(Average thickness of covering layer)

The average thickness of the covering layer of the expanded bead was obtained using the method described above. Specifically, the values calculated from the above formulas (1) to (3) are shown in Table 2 as the average thickness of the covering layer of the expanded bead.

(Adhesive properties)

The adhesive properties of the foamed core layer and the covering layer of the expanded beads were evaluated by the following method. One thousand expanded beads obtained in the Examples and Comparative Examples were randomly selected and visually inspected. Specifically, the expanded beads were observed to determine whether or not there were any portions where the covering layer had peeled off from the foamed core layer. The observation results were evaluated based on the following criteria. Expanded beads with no peeling of the covering layer are preferable because they have excellent adhesive properties.

(Evaluation criteria)

A: Less than five expanded beads with portions where the covering layer had peeled off from the foamed core layer
B: Five or more expanded beads with portions where the covering layer had peeled off from the foamed core layer

(Minimum molding pressure)

The expanded beads were dried at 23°C for 24 hours, and then pressurized to give an internal pressure such that the pressure in the cells of the expanded beads was the bead internal pressure shown in Table 2. These expanded beads were filled into a flat mold that was 250 mm long × 200 mm wide × 50 mm thick and that had the amount of cracking adjusted to 10% (i.e., 5 mm). The mold was clamped and an exhaust step in which steam was supplied from both sides of the mold for 5 seconds was carried out to preheat the mold. Steam was then supplied from one side of the mold to heat one side until a pressure 0.04 MPa (G) lower than a predetermined molding pressure was reached. Next, the one side was heated by supplying steam from the other side of the mold until a pressure 0.02 MPa (G) lower than the molding pressure was reached, and then heating (i.e., main heating) was performed until the predetermined molding pressure was reached. After heating, the pressure was released and the molded article was cooled with water until the surface pressure due to the expansion force of the molded article reached 0.04 MPa (G), and then released from the mold. After mold release, the molded article was cured in an 80°C atmosphere for 12 hours, and then left to cool slowly in room temperature atmosphere until the temperature of the molded article was the same as room temperature (23°C), thereby obtaining a molded article.

The fusion-bonding properties, surface properties, and recoverability of the obtained molded article were evaluated based on the criteria described below. Molded articles that passed all of the evaluations were considered to be acceptable. In this specification, molded articles that received a pass evaluation for both surface properties and recoverability are regarded as having a good appearance.

The molding and evaluation of the above molded article was performed at molding pressures ranging from 0.10 to 0.28 MPa (G) in increments of 0.02 MPa. The lowest molding pressure at which an acceptable product could be obtained was determined as the minimum molding pressure. The lower the minimum molding pressure is, the better the moldability of the expanded beads is, which enables to reduce the amount of steam required for molding.

(Fusion-bonding properties)

The molded article was bent and broken, and the number of expanded beads present on the fracture surface, C1, and the number of fractured expanded beads, C2, were determined. The ratio of the number of fractured expanded beads to the number of expanded beads present on the fracture surface (i.e., the material failure rate) was calculated using the formula $(C2/C1) \times 100$. The above measurement was performed five times using different test pieces, and the material failure rate was calculated for each. An arithmetic average value of the material failure rate of 80% or more was regarded as acceptable.

(Surface properties)

A 100 mm × 100 mm rectangle was drawn in the center of the molded article, and a diagonal line was then drawn from one corner of the rectangle. The number of voids (gaps between expanded beads) larger than a 2 mm square and gaps resulting from through-holes in the expanded beads that overlapped the diagonal line were counted. A total of less than five was regarded as acceptable.

(Recoverability)

A molded article was obtained using a flat mold that was 250 mm long × 200 mm wide × 50 mm thick, and the thickness of the molded article was measured near the four corners (specifically, 10 mm inward from the corners toward the center) and at the center (the portion dividing the article into two equal parts in both the length and width directions). The ratio (unit: %) of the thickness of the thinnest location to the thickness of the thickest location among the measured locations was then calculated. A ratio of 98% or more was regarded as acceptable.

(Short-cure moldability)

A molded article was obtained using the same method as described above for molding (minimum molding pressure), except that the molding pressure was set to the minimum molding pressure shown in Table 2 and the molded article was cured for two hours in an 80°C atmosphere after mold release. The obtained molded article was evaluated as described above (recoverability). The better the recoverability after two hours of curing is, the more stable the dimensions are even if the curing time is shortened, which is preferable.

(Evaluation criteria)

A: Acceptable recoverability after two hours of curing (ratio of thickness of thinnest location of the molded article to thickness of the thickest location of 98% or more)
B: Non-acceptable recoverability after two hours of curing (ratio of thickness of thinnest location of the molded article to thickness of the thickest location of less than 98%)

<Expanded beads molded article>

The following measurements and evaluations were performed on the expanded beads molded articles of the Examples and Comparative Examples. The density of the molded articles was measured using the molded article obtained at the minimum molding pressure in the molding described above (minimum molding pressure). The molded articles were left to stand for 24 hours at 50% relative humidity, 23°C, and 1 atm for conditioning, prior to use.

(Density)

The density of the expanded beads molded article (kg/m$^3$) was calculated by dividing the weight of the molded article by its volume calculated based on its dimensions.

[Raw materials]

The resins used in the Examples and Comparative Examples are shown in Table 1.

In Tables 1 and 2, resin names "LL" 1-4 and structure "LLDPE" refer to linear low density polyethylene (PE-LLD), and "PP" 1-5 refer to polypropylene-based resins. The structure "Et-Bt-PP" refers to an ethylene-butene-propylene copolymer, and "Et-PP" refers to an ethylene-propylene copolymer.

[Table 1]

Table 1

| Resin name | Structure | | Polymerization catalyst | Flexural modulus (MPa) | MFR (g/10min) | Tm (°C) | Density (g/cm$^3$) | Heat of fusion (J/g) | Crystallization temperature (°C) |
|---|---|---|---|---|---|---|---|---|---|
| LL1 | LLDPE | - | Ziegler-Natta (TN) | 210 | 2.3 | 121 | 0.918 | 102 | 104 |
| LL2 | LLDPE | - | Ziegler-Natta (TN) | 218 | 1.3 | 122 | 0.924 | 103 | 105 |
| LL3 | LLDPE | - | Metallocene (MC) | 550 | 3.8 | 127 | 0.938 | 140 | 114 |
| LL4 | LLDPE | - | Ziegler-Natta (TN) | 275 | 2.3 | 123 | 0.925 | 104 | 110 |
| PP1 | Et-Bt-PP | Ethylene 4.8% by mass Butene 1% by mass | Ziegler-Natta (TN) | 620 | 7.5 | 134 | - | - | - |
| PP2 | Et-PP | Ethylene 4.8% by mass | Ziegler-Natta (TN) | 640 | 7.0 | 135 | - | - | - |
| PP3 | Et-PP | Ethylene 3.1% by mass | Ziegler-Natta (TN) | 980 | 8.0 | 142 | - | - | - |
| PP4 | Et-PP | Ethylene 4.2% by mass | Ziegler-Natta (TN) | 600 | 7.0 | 134 | - | - | - |
| PP5 | Et-Bt-PP | Ethylene 3.1% by mass Butene 3.8% by mass | Ziegler-Natta (TN) | 650 | 6.0 | 133 | - | - | - |

Examples 1 to 3 and comparative examples 1 to 5

<Production of multi-layered resin particle>

The polypropylene-based resin shown in Table 2 was melt-kneaded in an extruder at a maximum set temperature of 240°C to obtain a resin melt for the core layer. At the same time, the linear low density polyethylene or polypropylene-based resin shown in Table 2 was melt-kneaded in an extruder at a maximum set temperature of 240°C to obtain a resin melt for the covering layer.

Next, the resin melt for the core layer and the resin melt for the covering layer were fed to a coextrusion die. In the die, the resin melt for the covering layer was laminated by coextrusion so as to cover the lateral surface of the resin melt for the core layer, the resultant laminate was extruded as a strand, cooled with water, cut with a pelletizer to a mass of about 1.0 mg, and dried to provide cylindrical multi-layered resin particles (particle size: 2.2 mm, aspect ratio L/D: 2.7).

The discharge amounts of the resin melt for the core layer and the resin melt for the covering layer were adjusted so that the mass ratio of the covering layer to the core layer [mass of covering layer/mass of core layer] was equal to the "mass ratio of covering layer" in Table 2. In addition, the multi-layered resin particles were produced by feeding zinc borate into the extruder as a cell nucleating agent for the resin melt for the core layer. At this time, the cell nucleating agent was supplied as a masterbatch, and the 1000 ppm by mass of zinc borate was contained as a cell nucleating agent only in the polypropylene-based resin of the core layer, and no cell nucleating agent was contained in the polymer of the covering layer.

<Production of expanded bead>

1 kg of the multi-layered resin particles were charged into a 5 L sealable vessel along with 3 L of water as a dispersing medium, and 0.3 parts by mass of kaolin as a dispersant and 0.2 parts by mass (as active ingredient) of a surfactant (Neogen manufactured by Dai-ichi Kogyo Seiyaku Co., Ltd., sodium alkylbenzene sulfonate) based on 100 parts by mass of the multi-layered resin particles were further added into the sealable vessel. Carbon dioxide as a blowing agent was supplied into the sealable vessel so that the pressure inside the vessel was as shown in Table 2, the mixture was heated to the expansion temperature shown in Table 2 while stirring, and held at the same temperature for 15 minutes. Then, the contents of the vessel were released to atmospheric pressure to obtain expanded beads (first-stage expanded beads). In all of the Examples and Comparative Examples, the covering layer of the expanded bead was in a non-foamed state.

Next, the expanded beads were placed in a pressure-resistant vessel (specifically, a metal drum), and air was forced into the pressure-resistant vessel to increase the pressure inside the vessel, causing air to permeate into the cells, thereby increasing the internal pressure inside the cells of the expanded beads. Next, steam was supplied to the expanded beads (first-stage expanded beads) taken out from the pressure-resistant vessel so that the pressure inside the pressure-resistant vessel (i.e., drum pressure) reached the pressure shown in Table 2, and the beads was heated under atmospheric pressure. The pressure inside the cells (i.e., internal pressure) in the first-stage expanded bead taken out from the pressure-resistant vessel was the value shown in Table 2. As a result, expanded beads (second-stage expanded beads) having a lower apparent density than the first-stage expanded beads were obtained. The evaluation results of the obtained expanded beads are shown in Table 2.

[Table 2]

Table 2

| | | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|---|
| Foamed core layer | Resin name | | PP1 | PP1 | PP2 | PP3 | PP1 | PP4 | PP3 | PP1 |
| | Structure | - | Et-Bt-PP | Et-Bt-PP | Et-PP | Et-PP | Et-Bt-PP | Et-PP | Et-PP | Et-Bt-PP |
| | Polymerization catalyst | - | TN | TN | TN | TN | TN | TN | TN | TN |
| | Melting point | °C | 134 | 134 | 135 | 142 | 134 | 134 | 142 | 134 |
| | Flexural modulus | MPa | 620 | 620 | 640 | 980 | 620 | 600 | 980 | 620 |
| | Ethylene component amount | % by mass | 4.8 | 4.8 | 4.8 | 3.1 | 4.8 | 4.2 | 3.1 | 4.8 |
| | Butene component amount | % by mass | 1.0 | 1.0 | - | - | 1.0 | - | - | 1.0 |
| | Total amount Ccmt of ethylene component and butene component | % by mass | 5.8 | 5.8 | 4.8 | 3.1 | 5.8 | 4.2 | 3.1 | 5.8 |
| Covering layer | Resin name | | LL1 | LL2 | LL1 | PP5 | PP5 | LL3 | LL4 | LL2 |
| | Structure | - | LLDPE | LLDPE | LLDPE | Et-Bt-PP | Et-Bt-PP | LLDPE | LLDPE | LLDPE |
| | Polymerization catalyst | - | TN | TN | TN | TN | TN | MC | TN | TN |
| | Melting point | °C | 121 | 122 | 121 | 133 | 133 | 127 | 123 | 122 |
| | Flexural modulus | MPa | 210 | 218 | 210 | 650 | 650 | 550 | 275 | 218 |
| | MFR | g/10min | 2.3 | 1.3 | 2.3 | 6 | 6 | 3.8 | 2.3 | 1.3 |
| | Mass ratio of covering layer | - | 0.031 | 0.031 | 0.031 | 0.031 | 0.031 | 0.111 | 0.031 | 0.176 |
| First-stage expansion step | Expansion temperature | °C | 139 | 139 | 140 | 147 | 139 | 139 | 147 | 138 |
| | Vessel internal pressure | MPa(G) | 3.0 | 3.0 | 3.0 | 2.5 | 3.0 | 3.0 | 2.5 | 3.5 |
| Second-stage expansion step | Internal pressure of first-stage expanded beads | MPa(G) | 0.50 | 0.5 | 0.5 | 0.5 | 0.5 | 0.5 | 0.5 | 0.5 |
| | Drum pressure | MPa(G) | 0.02 | 0.02 | 0.02 | 0.02 | 0.02 | 0.02 | 0.02 | 0.02 |

| | | | Example 1 | Example 2 | Example 3 | Comparative Example 1 | Comparative Example 2 | Comparative Example 3 | Comparative Example 4 | Comparative Example 5 |
|---|---|---|---|---|---|---|---|---|---|---|
| Expanded beads | Bulk expansion ratio | Times | 30 | 30 | 30 | 30 | 30 | 30 | 30 | 30 |
| | Heat of fusion of high temperature peak | J/g | 14 | 14 | 14 | 14 | 14 | 14 | 14 | 14 |
| | Closed cell content | % | 95 | 95 | 95 | 95 | 95 | 95 | 95 | 95 |
| | Average cell diameter | μm | 200 | 200 | 200 | 200 | 200 | 200 | 200 | 200 |
| | L/D of expanded beads | - | 1.1 | 1.1 | 1.1 | 1.1 | 1.1 | 1.1 | 1.1 | 1.1 |
| | Average thickness of covering layer | μm | 1.1 | 1.1 | 1.1 | 1.2 | 1.2 | 3.7 | 1.1 | 5.6 |
| Evaluation | Adhesive properties | - | A | A | A | A | A | A | B | A |
| Molding conditions | Bead internal pressure | MPa(G) | 0.10 | 0.10 | 0.10 | 0.10 | 0.10 | 0.10 | 0.10 | 0.10 |
| | Minimum molding pressure | MPa(G) | 0.12 | 0.12 | 0.14 | 0.28 | 0.20 | 0.18 | 0.28 | 0.14 |
| Evaluation | Short-cure moldability | - | A | A | A | B | B | B | B | B |
| Molded article | Density | kg/m³ | 33 | 33 | 33 | 33 | 33 | 33 | 33 | 33 |

EP 4 755 959 A1

It can be seen that the expanded beads of the Examples have a significantly lower minimum molding pressure at which a favorable molded article having excellent fusion-bonding properties, surface properties, and recoverability can be produced, and that in-mold molding can be performed at an extremely low steam pressure. Further, it can be seen that the expanded beads of the Examples have suppressed shrinkage and deformation and excellent recoverability even after a short curing time of just two hours in a high-temperature atmosphere. Therefore, the polypropylene-based resin expanded bead of the present invention can significantly reduce the steam pressure during in-mold molding, and even if the curing time is shortened, it is possible to obtain an expanded beads molded article having the desired shape and excellent appearance. In addition, the expanded beads of the Examples had excellent adhesive properties even though the resin making up the covering layer was a linear low density polyethylene polymerized using a Ziegler-Natta polymerization catalyst.

**Claims**

1. A polypropylene-based resin expanded bead comprising:

   a foamed core layer made of a polypropylene-based resin; and
   a covering layer covering the foamed core layer, wherein
   the covering layer is made of a linear low density polyethylene,
   a mass ratio of the covering layer to the foamed core layer is 0.005 or more and 0.05 or less, and
   the polypropylene-based resin making up the foamed core layer satisfies the following (i) or (ii):

      (i) the polypropylene-based resin making up the foamed core layer is an ethylene-butene-propylene copolymer i, and a total amount $Ccmt_{(i)}$ of an ethylene component and a butene component in the copolymer i is 3.5% by mass or more;
      (ii) the polypropylene-based resin making up the foamed core layer is one or more types of a copolymer ii selected from the group consisting of an ethylene-propylene copolymer and a butene-propylene copolymer, and a total amount $Ccmt_{(ii)}$ of an ethylene component and a butene component in the copolymer ii is 4.0% by mass or more.

2. The polypropylene-based resin expanded bead according to claim 1, wherein the linear low density polyethylene making up the covering layer is a resin polymerized using a Ziegler-Natta polymerization catalyst.

3. The polypropylene-based resin expanded bead according to claim 1 or 2, wherein the polypropylene-based resin making up the foamed core layer has a flexural modulus of 400 MPa or more and less than 800 MPa.

4. The polypropylene-based resin expanded bead according to claim 1 or 2, wherein the covering layer has an average thickness (Tt) of 0.1 $\mu$m or more and 5 $\mu$m or less.

5. The polypropylene-based resin expanded bead according to claim 1 or 2, wherein the polypropylene-based resin making up the foamed core layer is the ethylene-butene-propylene copolymer i.

6. The polypropylene-based resin expanded bead according to claim 1 or 2, wherein the polypropylene-based resin making up the foamed core layer is a resin polymerized using a Ziegler-Natta polymerization catalyst.

7. The polypropylene-based resin expanded bead according to claim 1 or 2, wherein the linear low density polyethylene making up the covering layer has a flexural modulus of 120 MPa or more and 600 MPa or less.

8. The polypropylene-based resin expanded bead according to claim 1 or 2, wherein the expanded bead has a bulk expansion ratio of 5 times or more and 45 times or less.

## INTERNATIONAL SEARCH REPORT

| International application No. |
|---|
| **PCT/JP2024/026133** |

| A. | CLASSIFICATION OF SUBJECT MATTER |
|---|---|

*C08J 9/18*(2006.01)i
FI:   C08J9/18 CES

According to International Patent Classification (IPC) or to both national classification and IPC

| B. | FIELDS SEARCHED |
|---|---|

Minimum documentation searched (classification system followed by classification symbols)

C08J9/18

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2004-115785 A (JSP CORP.) 15 April 2004 (2004-04-15)<br>claims, examples | 1-8 |
| A | JP 2021-143238 A (JSP CORP.) 24 September 2021 (2021-09-24)<br>claims, examples | 1-8 |
| A | JP 2023-58343 A (JSP CORP.) 25 April 2023 (2023-04-25)<br>claims, examples | 1-8 |

☐ Further documents are listed in the continuation of Box C.        ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **24 September 2024** | **08 October 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT
### Information on patent family members

International application No.

**PCT/JP2024/026133**

| Patent document cited in search report | | | Publication date (day/month/year) | Patent family member(s) | | | Publication date (day/month/year) |
|---|---|---|---|---|---|---|---|
| JP | 2004-115785 | A | 15 April 2004 | US | 2005/0113473 | A1 | |
| | | | | claims, examples | | | |
| JP | 2021-143238 | A | 24 September 2021 | US | 2023/0119472 | A1 | |
| | | | | claims, examples | | | |
| JP | 2023-58343 | A | 25 April 2023 | EP | 4306582 | A1 | |
| | | | | claims, examples | | | |

Form PCT/ISA/210 (patent family annex) (July 2022)

**REFERENCES CITED IN THE DESCRIPTION**

**Patent documents cited in the description**

- JP 2003039565 A
- JP 2000129028 A
- JP 51022951 B
- JP 4046217 B
- JP 6049795 B
- JP 6022919 B

**Non-patent literature cited in the description**

- Polymer Analysis Handbook. Kinokuniya Shoten, January 1995, 615-616, 618-619